# EUROPEAN PATENT APPLICATION

(11) **EP 2 325 730 A1**
(43) Date of publication of application: **25.05.2011**
(21) Application number: 08702851.0
(22) Date of filing: 31.01.2008
(51) Int. Cl.: G06F 3/038

(54) **DATA INPUT DEVICE, DATA INPUT METHOD, DATA INPUT PROGRAM, AND RECORDING MEDIUM CONTAINING THE PROGRAM**

(71) Applicant: Appside Co., Ltd., Tokyo 116-0013 (JP)
(72) Inventor: TANIGUCHI, Nobumitsu, Tokyo 116-0013 (JP); TAKAGI, Shigeo, Tokyo 116-0013 (JP)
(74) Representative: TBK
(86) International application number: PCT/JP2008/000119
(87) International publication number: WO 2009/095954

(57) **Abstract**

A data input device that enables the user to execute a scrolling operation rapidly and infallibly without enduring any operational burden is provided.

The data input device comprises a force detecting unit for detecting an applied force as a rectangular coordinate data, a converting unit for converting the rectangular coordinate data detected by the force detecting unit into a polar coordinate data, a scrolling amount deciding unit for deciding the scrolling amount of an element displayed in a display based on the r value of the polar coordinate data converted by the converting unit, and a scrolling direction deciding unit for deciding the scrolling direction of the element based on the change in the θ value of the polar coordinate data converted by the converting unit.

## Description

### TECHNICAL FIELD

This invention relates to a data input device (human input device). More specifically, it relates to a data input device which changes the scrolling amount of an element displayed in a display means in accordance with the magnitude of force applied on a force sensor.

### BACKGROUND ART

Heretofore, as one kind of data input devices, the data input devices utilizing rotational input such as a jog input device that is used for video edition or music edition and a mouse that is furnished with a rotary wheel have been widely known. When the selection of an element (such as a list or an icon) displayed in a display means is made by using the data input device of this kind, however, the problem arises that the user's operating burden increases because the rotational input to be applied must be increased in proportion to an increase in the number of elements to be displayed.

As a data input device that solves this problem, the data input device so constructed as to vary the scrolling speed in proportion to the speed of a rotational input has been proposed (refer to Patent Document 1, for example). This data input device can expedite the scrolling by increasing the speed of rotational input even when the number of elements to be displayed is large.
Patent Document 1: Japanese Laid-Open Patent Publication No. 2005-507112

### DISCLOSURE OF THE INVENTION

### PROBLEM TO BE SOLVED BY THE INVENTION

For the purpose of enabling the scrolling to proceed rapidly by using the data input device that is disclosed in Patent Document 1 mentioned above, however, the user is required to perform the scrolling operation by rapidly rotating his finger or a stylus pen. Thus, the problem that the user's operating burden is large still persists.

This invention has been produced for the purpose of solving this pending problem and has an object of providing a data input device, a data input method, and a data input program which enable the user to effect the scrolling operation rapidly and infallibly without enduring any operational burden and a recording medium which has the program recorded therein.

### MEANS FOR SOLVING PROBLEM

The object of this invention mentioned above is attained by the following means.
(1) This invention consists in a data input device which comprises a force detecting unit for detecting an applied force, a scrolling amount determining unit for determining the scrolling amount of an element displayed in a display means based on the magnitude of a force detected by the force detecting unit mentioned above, and a scrolling direction determining unit for determining the scrolling direction of the element mentioned above based on the change in the direction of the force detected by the force detecting unit mentioned above.
(2) This invention also consists in a data input device which comprises a force detecting unit for detecting an applied force as a rectangular coordinate data, a converting unit for converting the rectangular coordinate data detected by the force detecting unit mentioned above into a polar coordinate data, a scrolling amount determining unit for determining the scrolling amount of an element displayed in a display based on the r value of the polar coordinate data converted by the converting unit mentioned above, and a scrolling direction determining unit for determining the scrolling direction of the element mentioned above based on the change in the θ value of the polar coordinate data converted by the converting unit mentioned above.
(3) This invention also consists in a data input device set forth in (2) above, wherein the scrolling amount determining unit mentioned above determines the scrolling amount mentioned above by further taking into consideration the magnitude of the change in the θ value mentioned above.
(4) This invention also consists in a data input device set forth in (2) or (3) above, having the device further comprise a memory for storing a table stipulating the corresponding relation between the range of the r value mentioned above and the scrolling amount mentioned above and having the scrolling amount determining unit mentioned above determine the scrolling amount corresponding to the r value obtained by the converting unit mentioned above by consulting the table stored in the memory mentioned above.
(5) This invention also consists in a data input device set forth in any of (2) - (4) above, having the device further comprise a first judging unit for judging whether the r value obtained by the converting unit mentioned above exceeds a prescribed threshold or not and having the scrolling amount determining unit mentioned above determine the scrolling amount mentioned above when the r value is judged by the first judging unit mentioned above to exceed the prescribed threshold.
(6) This invention also consists in a data input device set forth in any of (2) - (5) above, having the device further comprise a second judging unit for judging whether the magnitude of the θ value obtained by the converting unit mentioned above exceeds a prescribed threshold or not and having the scrolling direction determining unit mentioned above determine the scrolling direction when the magnitude of the change in the θ value is judged by the second judging unit mentioned above to exceed the prescribed threshold.
(7) This invention also consists in a data input device set forth in any of (1) - (6) above, which is a portable telephone, a PHS, a notebook personal computer, a portable game device, a PDA, an electronic pocketbook, a remote controller for an electronic device, a digital audio player, a camera, a digital camera, or a cam coder.
(8) This invention also consists in a data input device set forth in any of (1) - (7), which is a peripheral device for a computer or a game device.
(9) This invention also consists in a data input method which comprises a force detecting step for detecting an applied force, a scrolling amount determining step for determining the scrolling amount of an element displayed in a display based on the magnitude of the force detected by the force detecting step mentioned above, and a scrolling direction determining step for determining the scrolling direction of the element mentioned above based on the change in the direction of the force detected by the force detecting step mentioned above.
(10) This invention also consists in a data input method which comprises a force detecting step for detecting an applied force as a rectangular coordinate data, a converting step for converting the rectangular coordinate data detected by the force detecting step mentioned above into a polar coordinate data, a scrolling direction determining step for determining the scrolling direction of an element displayed in a display based on the r value of the polar coordinate data converted by the converting step mentioned above, and a scrolling direction determining step for determining the scrolling direction of the element mentioned above based on the change in the θ value of the polar coordinate data converted by the converting step mentioned above.
(11) This invention also consists in a data input program which causes a force detecting step for detecting an applied force, a scrolling amount determining step for determining the scrolling amount of an element displayed in a display based on the magnitude of the force detected by the force detecting step mentioned above, and a scrolling direction determining step for determining the scrolling direction of the element mentioned above based on the change in the direction of the force detected by the force detecting step mentioned above to be executed by a data input device.
(12) This invention also consists in a data input program which causes a force detecting step for detecting an applied force as a rectangular coordinate data, a converting step for converting the rectangular coordinate data detected by the force detecting step mentioned above into a polar coordinate data, a scrolling amount determining step for determining the scrolling amount of an element displayed in a display based on the r value of the polar coordinate data converted by the converting step mentioned above, and a scrolling direction determining step for determining the scrolling direction of the element mentioned above based on the change in the θ value of the polar coordinate data converted by the converting step mentioned above to be executed by a data input device.
(13) This invention also consists in a computer-readable recording medium which has a data input program set forth in (11) or (12) at least recorded therein.

### EFFECT OF THE INVENTION

The data input device, data input method, and data input program provided by this invention enable the user to adjust easily the scrolling amount of an element by adjusting the magnitude of a force applied on a force detecting unit and moreover acquire high-speed scrolling by simply increasing the force applied on the force detecting unit without requiring his finger or a stylus pen to be continuously rotated at a high speed. Thus, the user can carry out the scrolling operation rapidly and infallibly without bearing an operational burden.

### MODE(S) FOR CARRYING OUT THE INVENTION

The modes for embodying this invention will be described in detail below with reference to the drawings.

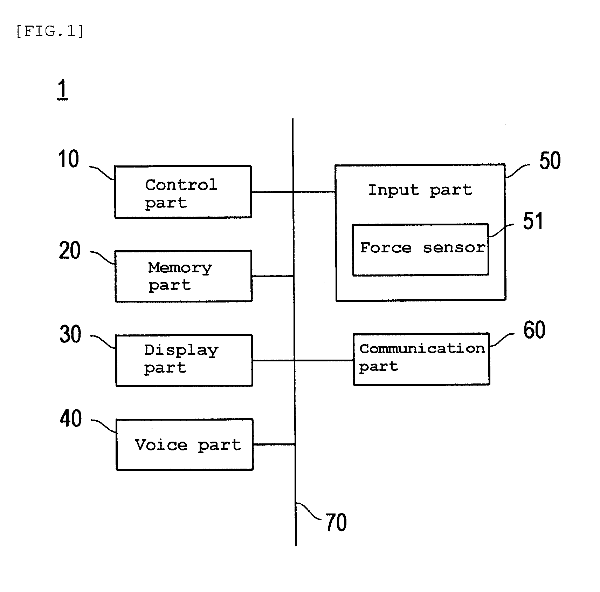

FIG. 1 is a block diagram showing the construction of a portable telephone to which the data input device according to this invention is applied. As illustrated in FIG. 1, a portable telephone 1 according to the present mode of embodiment is furnished with a control part 10, a memory part 20, a display part 30, a voice part 40, an input part 50, and a communication part 60. These component parts are mutually connected via a bus 70 which serves to exchange signals.

The control part 10 is a CPU and controls the component parts mentioned above and performs various arithmetic processes in accordance with a program. The memory part 20 comprises an ROM which has various programs and parameters stored in advance therein, an RAM which, as a working area, temporarily stores programs and data therein, and the like. The display part 30 is a liquid crystal display and is used for displaying various kinds of data. The voice part 40 is a speaker and microphone and is used for inputting and outputting voices. The input part 50 comprises a force sensor 51 which will be described herein below and, when necessary, further comprises various function keys 52 such as a selection key for selecting the function of the input part 50 and a power source key for turning on or off a power source and is used for making various inputs. The communication part 60 connects with a mobile communication network and effects mobile communication by using a radio wave of a prescribed frequency band in accordance with a prescribed communication method such as FDMA, TDMA, PDC, GSM, CDMA, or GPRS.

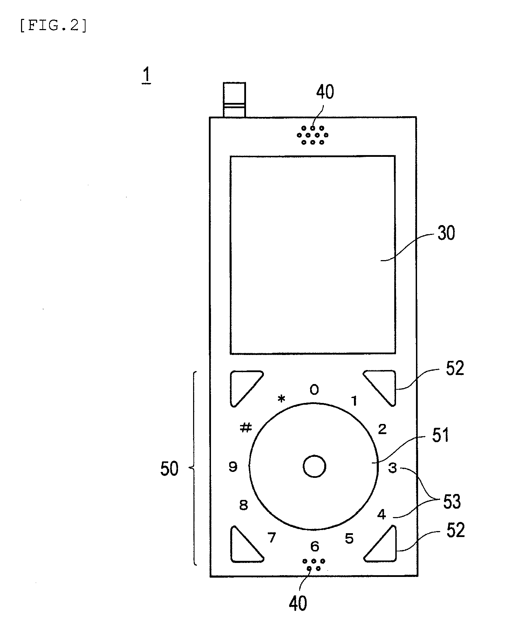

FIG. 2 is a schematic plan view for explaining the outer structure of the portable telephone 1. The input part 50 of the portable telephone 1, as shown in FIG. 2, is so constructed as to be furnished with a force sensor 51 in the place of the ten key that is incorporated in the input part of the ordinary portable telephone. Further, on the casing surface of the marginal part of the key top part of the force sensor 51, a character 53 consisting of a digit and a symbol is set up and displayed.

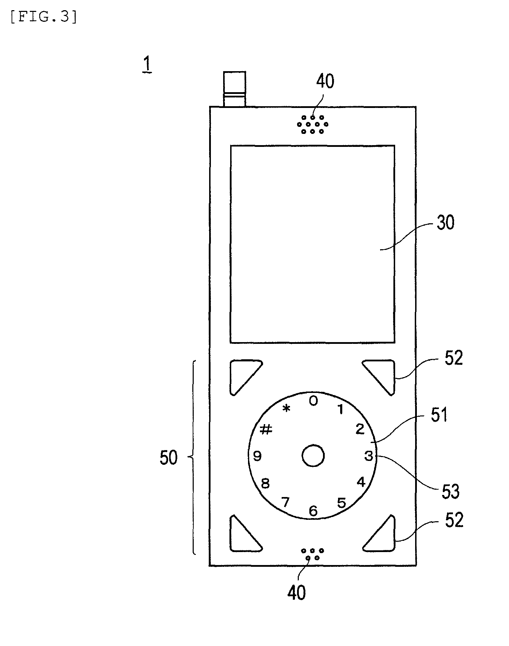

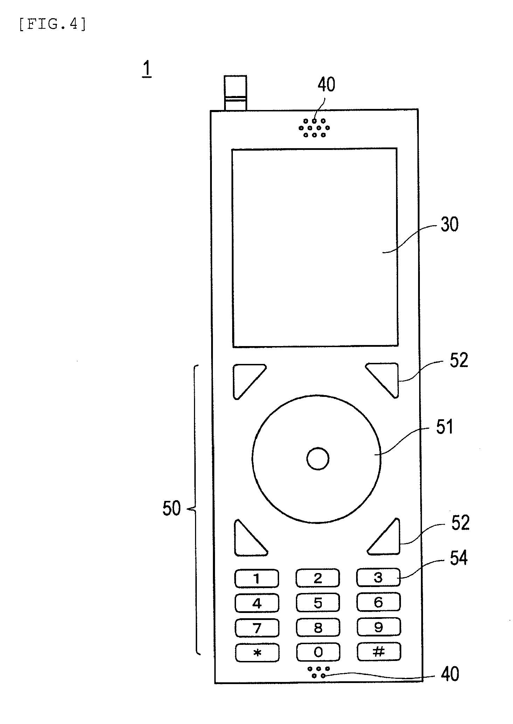

Here, in the present mode of embodiment, the input part 50 of the portable telephone 1 operates as a unit for selecting and inputting characters such as digits besides operating as a unit for detecting the force applied by the force sensor 51 and controlling the scrolling operation of an element as described herein below. That is, the portable telephone 1 is so constructed as to detect the force applied by the force sensor 51 of the input part 50 as a rectangular coordinate data, convert the detected rectangular coordinate data into a polar coordinate data, select a character allocated to the obtained θ value by consulting an allocation table having registered therein characters and the range of θ values to be allocated to the individual characters, and determine an input. Incidentally, the character 53 may be set up and displayed not on the casing surface but on the key top part of the force sensor 51 as shown in FIG. 3. Further, the input part 50 may be so constructed as to operate exclusively as a unit for controlling the scrolling of an element by separately disposing such a character selecting-inputting unit as a ten key as illustrated in FIG. 4.

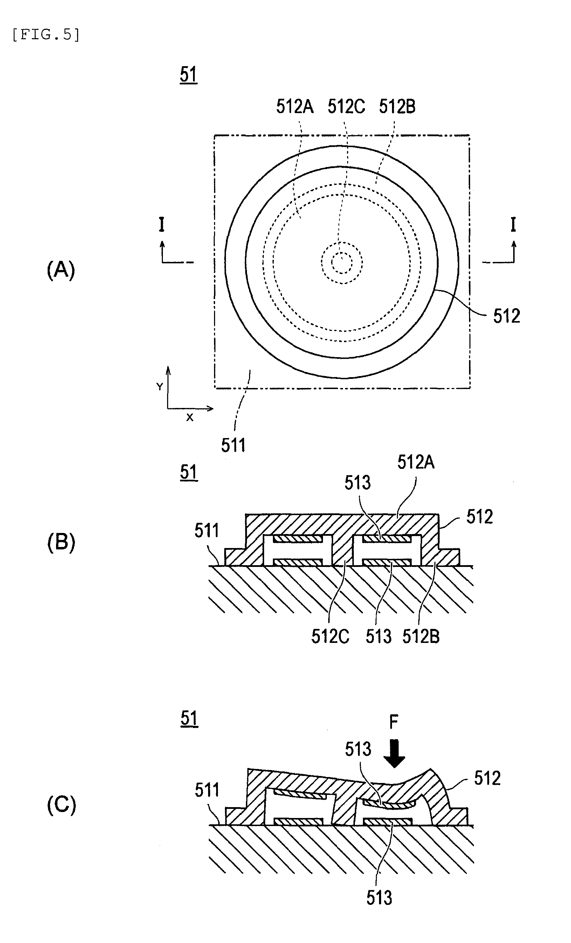

Next, the force sensor 51 used in the input part 50 of the portable telephone 1 according to the present mode of embodiment will be described below with reference to FIG. 5. FIG. 5 is a drawing showing one example of the structure of the force sensor 51; (A) representing a plan view, (B) representing a cross section taken along the line I-I of (A), and (C) representing the state in which force is applied on one part of the force sensor 51 in (B).

The force sensor 51 is a capacitance-type force sensor and comprises a substrate 511 and a displacing part 512 disposed on the substrate 511 as illustrated in FIG. 5 (A) and (B). The displacing part 512 is formed by integrally shaping a disciform key top part 512A, a cylindrical barrier part 512B, and a columnar supporting part 512C disposed in the axial portion. It is formed of such an elastic material as rubber or a metal and is so constructed as to deform under an external force and restore the original shape when the application of the external force ceases to exist.

Inside the force sensor 51, toric electrodes 513 are disposed opposite the inner surface part of the key top part 512A of the displacing part 512 and the substrate 511. When force F is applied as by the user's finger tip on the key top part 512A of the force sensor 51 as shown in FIG. 5 (C), the displacing part 512 yields to the force and deforms and the pressed parts of the opposite electrodes 513 approach each other and the distance between them narrows. The force sensor 51 serves to draw out the consequently increased capacitance and output it as an electric signal. The output from the force sensor 51 is obtained as rectangular coordinate data, namely the components in the perpendicularly crossing XY directions (see FIG. 5).

The method and structure of the force sensor that can be utilized for the data input device of this invention are not particularly limited so long as they are capable of converting the applied force into an electric signal and outputting the electric signal as a rectangular coordinate data. Besides the force sensor utilizing the change in capacitance mentioned above, the force sensors of various methods and structures that utilize the change in resistance wire, the change in variable resistance, the change in magnetic force, and the like can be used.

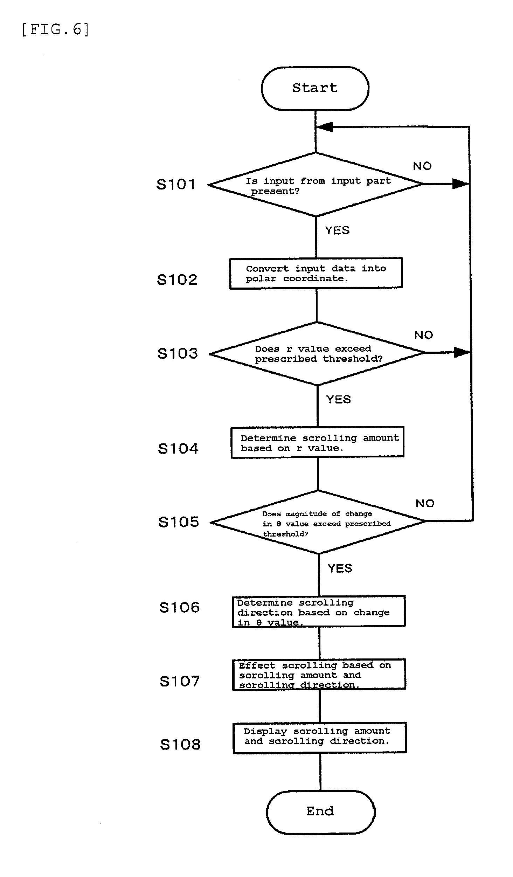

The operation of the portable telephone 1 in the present mode of embodiment will be outlined below. FIG. 6 is a flow chart showing the procedure for scroll controlling by the control part 10 of the portable telephone 1 of the present mode of embodiment. The algorithm illustrated by the flow chart of FIG. 6 is stored as a control program in the memory part 20 of the portable telephone 1 and is suitably read out and executed by the control part 10 as soon as the operation of the portable telephone 1 begins.

In FIG. 6, the control part 10 of the portable telephone 1 awaits the arrival of an input from the input part 50 (choice of NO at S101). When external force is applied on the key top part 512A of the force sensor 51 of the input part 50 as by the user's finger tip, the input part 50 fetches the applied force as a rectangular coordinate data and outputs the data to the control part 10.

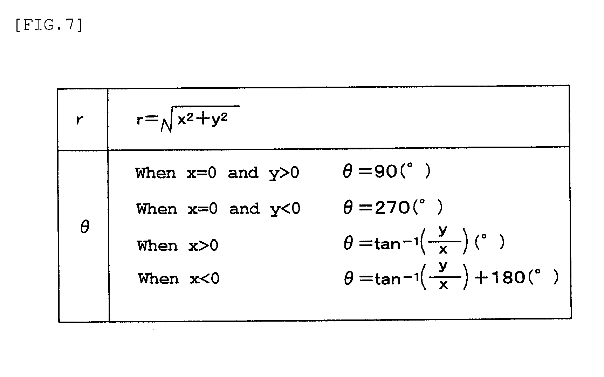

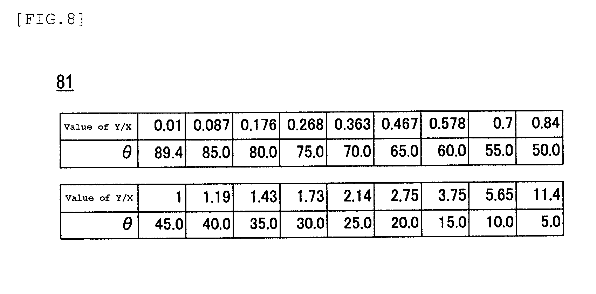

The control part 10, on receiving an input from the input part 50 (the choice YES at S101), converts the input rectangular coordinate data into a polar coordinate data in accordance with the conversion equation shown in FIG. 7 and obtains an r value (magnitude of force) and a θ value (direction of force) (S102). The control part 10 further causes the latest r value and θ value so obtained to be stored at a prescribed area of the memory part 20 and, at the same time, causes the r value and θ value previously stored at the step S102 to be stored at another area of the memory part 20. Incidentally, the conversion to the θ value is not always required to rely on the conversion equation mentioned above but may utilize such an X/Y value to θ value conversion table 81 as shown in FIG. 8, which is stored in advance in the memory part 20. While FIG. 8 shows an example of the θ value conversion table that lists the θ values at 5°intervals, it goes without saying that these intervals of the conversion table to be utilized may be arbitrarily adjusted as required.

Then, the process compares the r value obtained at the step S102 with a prescribed threshold (0.5, for example) and, on finding the r value to be less than the threshold (choice of NO at S103), returns to the step S101 and awaits the arrival of a new input from the input part 50. When the r value at the step S103 conversely exceeds the threshold (choice of YES at S103), the process advances to the step S104. When this device is furnished with a first judging unit that is adapted to judge whether the r value obtained at the step S102 exceeds the prescribed threshold or not and constructed so as to determine the scrolling amount when the r value is found by the first judging unit to exceed the prescribed threshold, the device enables the malfunction, sensor noise, and the like of the input part 50 and the input not desired by the user (the input of the r value falling short of the prescribed threshold) to be effectively excluded by setting the prescribed threshold at a proper level.

Then, at the step S104, the scrolling amount is determined based on the r value obtained at the step S102 and consulting the scrolling amount converting table stored in the memory part 20.

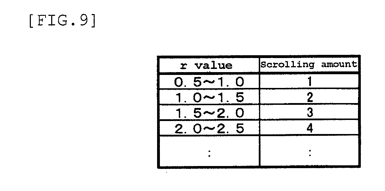

FIG. 9 is a drawing showing one example of the scrolling amount converting table. In this scrolling amount converting table, the scrolling amounts varied in successive ranges each of an r value of 0.5 are laid out and are so set that the scrolling amounts increase linearly in the respective ranges of the r value of 0.5. When the scrolling amount converting table of this description is used, the depression applied by the user on the key top part 512A of the force sensor 51 enables the scrolling amount to be linearly increased in proportion to the depressing force and to be adjusted easily. Since this device is further furnished with a memory for storing a table specifying the corresponding relation between the range of the r value and the scrolling amount (the memory part 20 in the present mode of embodiment) and adapted to determine the scrolling amount corresponding to the r value obtained at the step S102 by consulting the table stored in the memory, it is capable of decreasing the processing time, shortening the response time from the time of inputting data in the input part to the time of executing the scrolling, and simplifying the program as compared with the case of determining the scrolling amount by calculation.

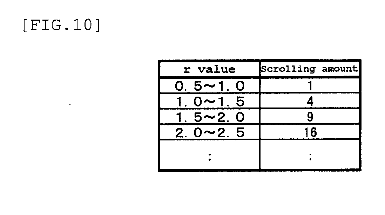

FIG. 10 is a drawing showing one example of the scrolling amount converting table. In this scrolling amount converting table, the scrolling amounts are so set as to increase in the form of quadratic function for the ranges each of the r value of 0.5. When the scrolling amount converting table of this description is used, the depression applied by the user on the key top part 512A of the force sensor 51 enables the scrolling amount to increase in the form of quadratic function in proportion to the depressing force and allows the scrolling to be further expedited.

It goes without saying that, in any of the preceding examples, the number of scrolling amounts laid out by the scrolling amount converting table and the ranges and sizes of the r values to which the scrolling amounts are laid out (or not laid out) can be properly varied as required. Though the present mode of embodiment adduces an example of converting an r value to a scrolling amount by consulting the scrolling amount converting table, this invention is not limited thereto but allows the scrolling amount to be worked out by calculation based on the r value without consulting the scrolling amount converting table at the step S104. When the device is so constructed as to determine the scrolling amount by taking into consideration the magnitude Δθ of the change in the θ value (by defining the scrolling amount as the function of r value and Δθ value) (as described herein below), it enables the control of scrolling to be effected to a greater extent.

With reference back to FIG. 6, the process at the step S105 returns to the step S101 and awaits arrival of a new input from the input part 50 when the absolute value of the magnitude Δθ (=θ1 - θ2) of the change between the present θ value (θ2) stored at the step S102 and the previous θ value (θ1) stored at the step S102 falls short of the prescribed threshold (30°, for example) (choice of NO at S105). When the absolute value of the magnitude Δθ of the change in the θ value conversely exceeds the prescribed threshold (choice of YES at S105), the process advances to the step S106. When this device is further furnished with a second judging unit that is adapted to judge whether the magnitude Δθ of the change in the θ value obtained at the step S105 exceeds the prescribed threshold or not and constructed so as to determine the scrolling direction when the magnitude Δθ of the change in the θ value is found by the second judging unit to exceed the prescribed threshold, the device enables the malfunction, sensor noise, and the like of the input part 50 and the input not desired by the user (the input of the r value falling short of the prescribed threshold) to be effectively excluded by setting the prescribed threshold at a proper level.

Then, at the step S106, the direction of scrolling is determined based on the change in the θ value and, at the step S107, the element (list, icon, or the like) displayed in the display part 30 is scrolled based on the scrolling amount determined at the step S104 and the scrolling direction determined at the step S106.

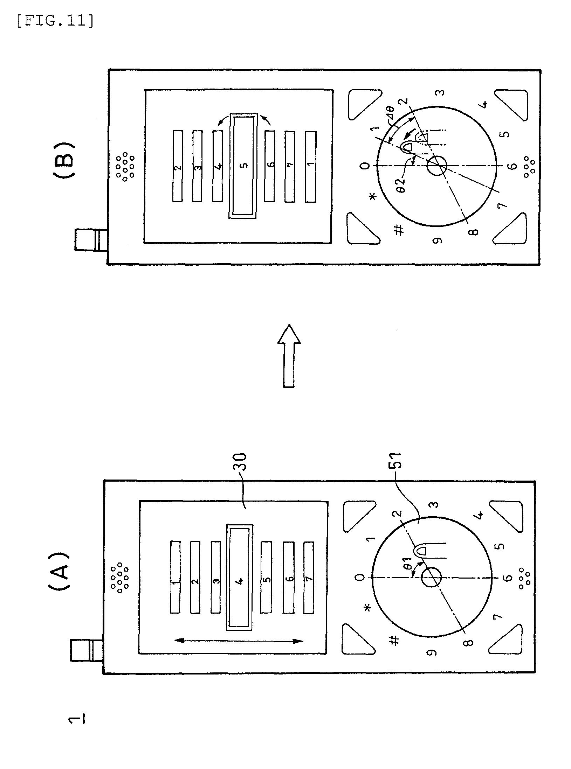

For example, when the user's finger applies depression with a constant depressing force (r value = 0.7, for example) at a polar coordinate θ1 of the key top part 512A of the force sensor 51 as shown in FIG. 11 (A) and the finger is moved, as kept under the depression, to the position of a polar coordinate θ2 as shown in FIG. 11 (B), the sign of the magnitude Δθ (= θ1 -θ2) of the change in the θ value is made to assume a positive value and the scrolling direction is fixed in the first direction (the upper direction, for example) because of θ1 > θ2. Since the r value falls in the range of 0.5 - 1.0 when the r value is 0.7, the scrolling amount is determined at 1 in accordance with the scrolling amount converting table of FIG. 9 mentioned above. As a result, the list displayed in the display part30 is given one scroll in the upper direction.

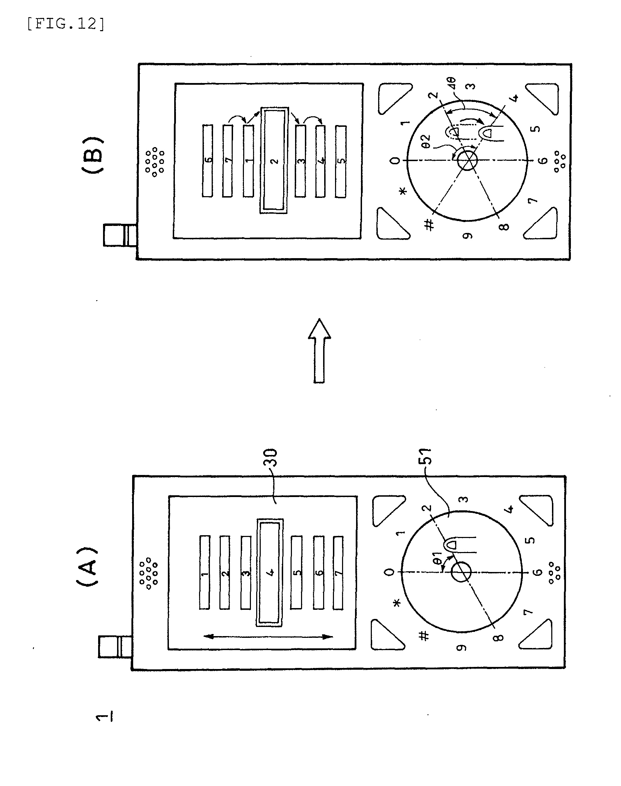

When the user' s finger applies depression with a constant depressing force (r value = 1.2, for example) at a polar coordinate θ1 of the key top part 512A of the force sensor 51 as shown in FIG. 12 (A) and the finger is moved, as kept under the depression, to the position of a polar coordinate θ3 as shown in FIG. 12 (B), the sign of the magnitude Δθ (= θ1 - θ3) of the change in the θ value is made to assume a negative value and the scrolling direction is fixed in the second direction (the lower direction, for example) different from the first direction because of θ1 > θ3. Since the r value falls in the range of 1.0 - 1.5 when the r value is 1.2, the scrolling amount is determined at 2 in accordance with the scrolling amount converting table of FIG. 9 mentioned above. As a result, the list displayed in the display part 30 is given two scrolls in the lower direction.

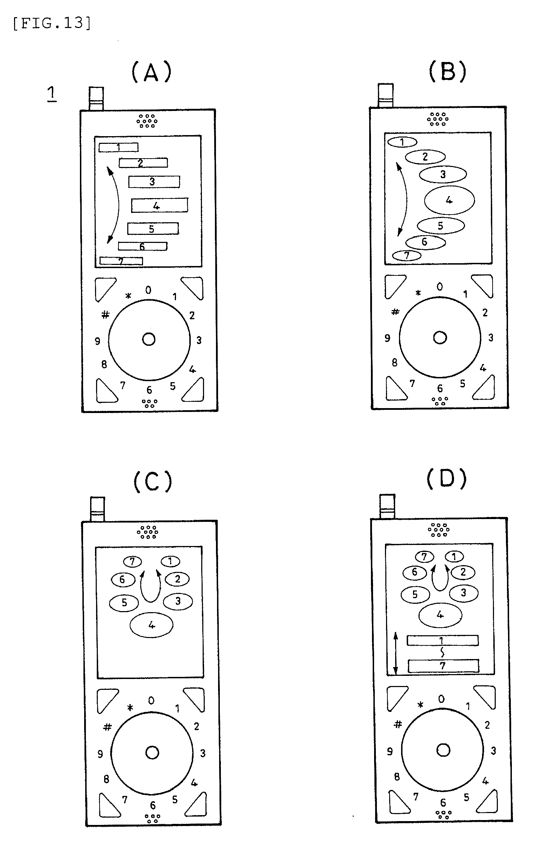

Though the present mode of embodiment adduces an example of scrolling a list (element) in the vertical direction, this invention is not limited thereto but allows a plurality of lists to be scrolled by being rotated in the vertical direction as shown in FIG. 13 (A), a plurality of icons to be scrolled by being rotated in the vertical direction as shown in FIG. 13 (B), a plurality of icons to be scrolled by being rotated in the lateral direction as shown in FIG. 13 (C), and a plurality respectively of icons and lists to be combined and synchronously scrolled as shown in FIG. 13 (D).

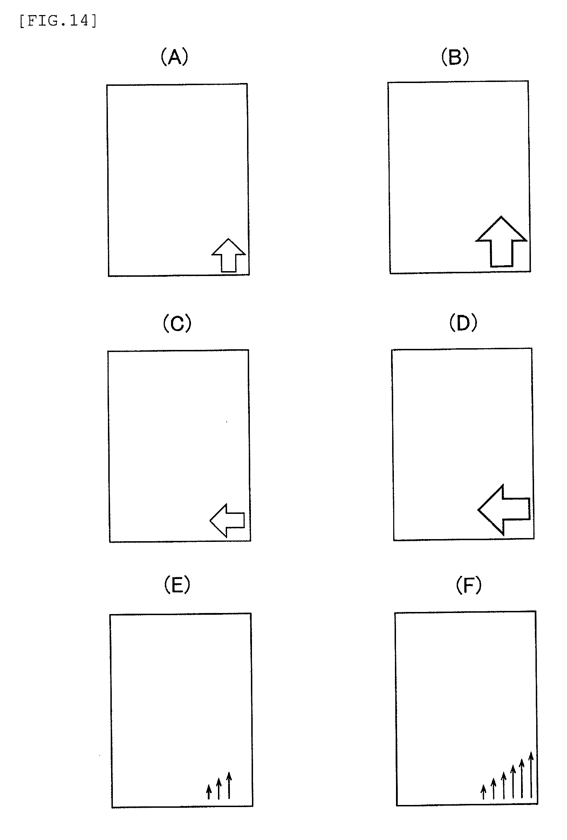

With reference back to FIG. 6, at the step S108, the scrolling amount determined at the step S104 and the scrolling direction determined at the step S106 are displayed in the display part 30. The present scrolling amount and scrolling direction are displayed, for example, by the size and direction of an arrow mark at least at one of the four corners and four sides of the display part 30 as shown in FIG. 14 (A) - (D). As a result, the user is enabled to confirm easily the present scrolling amount and scrolling direction.

Specifically, FIG. 14 (A) depicts a small amount of (slow) scrolling being made in the upper direction, FIG. 14 (B) a large amount of (rapid) scrolling being made in the upper direction, FIG. 14 (C) a small amount of (slow) scrolling being made in the left direction, and FIG. 14 (D) a large amount of (rapid) scrolling being made in the left direction.

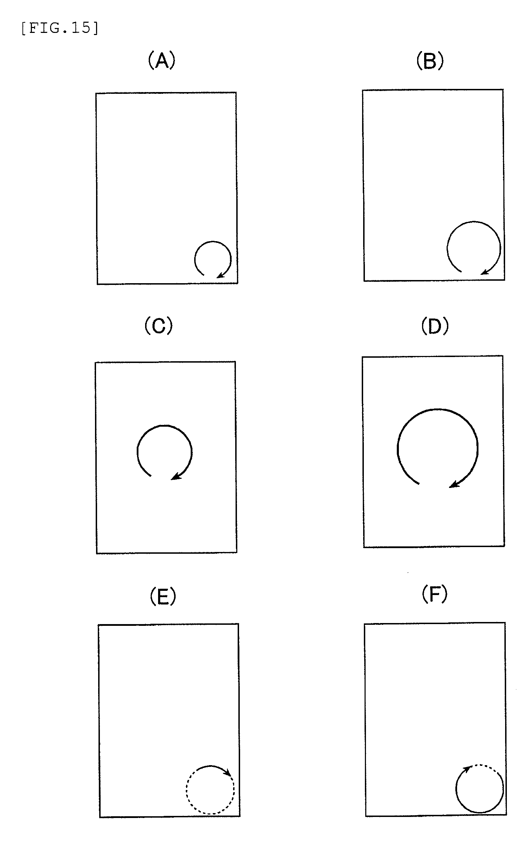

FIG. 14 (E) and (F) represent other modes of display, depicting the present scrolling amount and scrolling direction by the number and direction of arrow marks. FIG. 15 (A) and (B) represent an example of showing the scrolling amount as in the case of effecting a rotational input by tracing the key top part of the force sensor 51 and the direction of the rotational input of the key top part by the radius of a circle and the direction of an arrow mark and (E) and (F) represent an example of showing the scrolling amount and the direction of rotational input of the key top part by the length of a circular arc and an arrowmark. Since the direction of a rotational input is associated with the scrolling direction (rapid traverse clockwise and rewinding anticlockwise, for example, in the reproduction of a moving image), these displays enable the user to know the present scrolling amount and scrolling direction.

The scrolling amount and the scrolling direction may be constantly displayed or may be displayed for a fixed duration at a stated timing or in response to a command to display. In the latter case, their displaying positions are not always required to be limited to the four corners or the four sides of the display part 30 but they may be largely displayed at arbitrary positions of the display part 30 as shown in FIG. 15 (C) and (D).

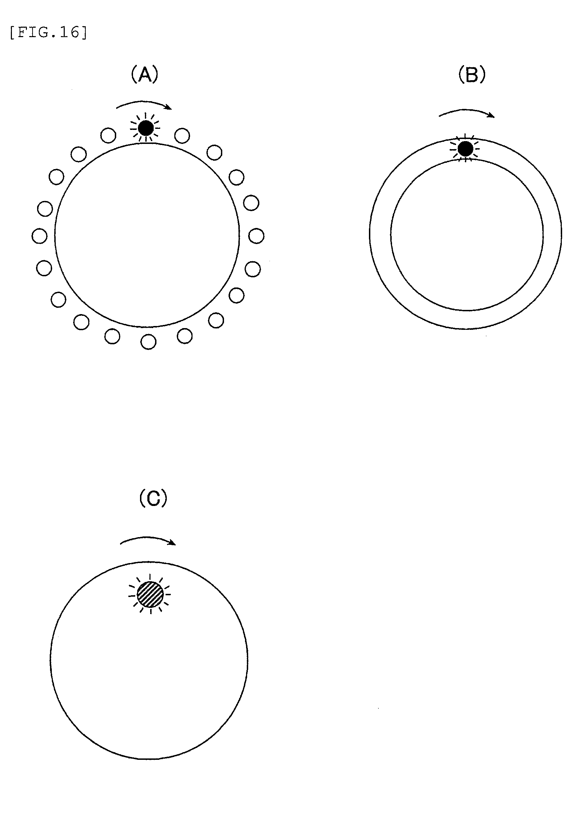

The scrolling amount and the scrolling direction, besides being displayed in the display part 30, maybe displayed by causing a plurality of LSD or like lamps disposed in the marginal part of the key top part of the force sensor 51 to be turned on sequentially as shown in FIG.16 (A) so as to indicate the speed and the direction of sequentially lighting lamps. They may be otherwise displayed by causing backlights on the marginal part of the key top part or backlights on part of the key top part to be similarly turned on as shown in FIG. 16 (B) or (C).

The control part 10 of the portable telephone 1 executes the scroll controlling mentioned above repeatedly unless the power source is cut off.

As described above, the portable telephone 1 according to the present mode of embodiment comprises a force detecting unit for detecting an applied force as a rectangular coordinate data (the force sensor 51 in the present mode of embodiment), a converting unit for converting the rectangular coordinate data detected by the force detecting unit into a polar coordinate data (corresponding to the step S102 in the scroll controlling process in the present mode of embodiment), a scrolling amount determining unit (corresponding to the step S104 of the scroll controlling process in the present mode of embodiment) for determining the scrolling amount of an element (a list in the present mode of embodiment) displayed in a display (the display part 30 in the present mode of embodiment) based on the r value of the polar coordinate data converted by the converting unit, and a scrolling direction determining unit (corresponding to the step S106 in the scroll controlling process in the present mode of embodiment) for determining the scrolling direction of the element based on the change in the θ value of the polar coordinate data converted by the converting unit.

With the portable telephone 1 according to the present mode of embodiment, the user is enabled to adjust easily the scrolling amount by adjusting the magnitude of force applied on the force detecting unit, fulfill the purpose of scrolling the element at a high speed satisfactorily by merely increasing the force applied on the force detecting unit, and obviate the necessity of continuing the rotation of the user's finger or a stylus pen at a high speed. As a result, the user is enabled to carry out the scrolling operation quickly and infallibly without feeling an operational burden.

The "display" according to this invention is not limited to a liquid crystal display but may be an organic EL, a plasma display, or the like, for example.

The "element" according to this invention is not limited to a list or an icon but may be a reading screen of browser, an editing screen of document preparation software, a still picture, or a frame of moving image, for example. That is, the control of the scrolling direction and scrolling amount by the data input device of this invention can be utilized for the purpose of controlling the speed of rapid traverse or rewinding in the moving image reproducing software, for example.

Though, in the preceding mode of embodiment, the data input device of this invention has been explained with respect to a portable telephone cited as an example, this invention is not limited to this embodiment but may be applied to any device which is furnished with a data input part (human input device). As other examples fit for application of the data input device of this invention, PHS, notebook personal computers, portable game devices, PDA, portable computers such as electronic pocketbook, remote controllers for various electronic devices, digital audio players, digital cameras, and household electric devices such as cam coders may be cited. The data input device of this invention may be constructed as a peripheral device for personal computers, game devices, and the like, particularly as an input device which substitutes for a mouse, a keyboard, a joystick, and the like.

The data input device and data input method according to this invention can be realized either with a hardware circuit used exclusively for executing each of the procedures mentioned above or by making a CPU execute a program that sets forth the procedure. When this invention is realized by the latter way, the aforementioned program for operating the data input device may be provided by a floppy (registered trademark) disk or such a computer readable recording medium as CD-ROM or may be provided on line via such a network as an internet. In this case, the program which is recorded in a computer readable recording medium is usually transferred to ROM or a hard disc and stored therein. This program may be provided as a single application software, for example, or may be incorporated in a basic software of a device which, when provided as an exclusive driver, serves as one function of the data input device.

### INDUSTRIAL APPLICABILITY

According to this invention, a data input device which enables the user to effect the scrolling operation rapidly and infallibly without enduring any operational burden is provided.

### BRIEF DESCRIPTION OF THE DRAWINGS

[FIG. 1] This is a block diagram showing the structure of a portable telephone to which the data input device according to this invention is applied.
[FIG. 2] This is a schematic plan view for illustrating one example of the external structure of the portable telephone 1.
[FIG. 3] This is a schematic plan view for illustrating another example of the external structure of the portable telephone 1.
[FIG. 4] This is a schematic plan view for illustrating yet another example of the external structure of the portable telephone 1.
[FIG. 5] This is a drawing showing one example of the structure of a force sensor 51; (A) representing a plan view, (B) representing a cross section taken along the line I-I of (A), and (C) representing the state having a force applied on part of the input sensor 51 in (B).
[FIG. 6] This is a flow chart showing the procedure of the process for inputting a character by a control part 10 of the portable telephone 1.
[FIG. 7] This is a conversion formula for converting a rectangular coordinate date into a polar coordinate data.
[FIG. 8] This is a conversion table for converting an X/Y value to θ.
[FIG. 9] This is a drawing showing one example of the scrolling amount converting table.
[FIG. 10] This is a drawing showing another example of the scrolling amount converting table.
[FIG. 11] This is a schematic drawing showing one example of scroll control in a portable telephone 1; (A) representing a drawing showing the appearance which exists when the scroll control is started and (B) representing a drawing showing the appearance which exists when the scroll control is concluded.
[FIG. 12] This is a schematic drawing showing another example of scroll control in a portable telephone 1; (A) representing a drawing showing the appearance which exists when the scroll control is started and (B) a drawing showing the appearance which exists when the scroll control is concluded.
[FIG. 13] This is a drawing showing other modes of scrolling; (A) representing a drawing showing an example of effecting the scroll by rotating a plurality of lists in the vertical direction, (B) representing a drawing showing an example of effecting the scroll by rotating a plurality of icons in the vertical direction, (C) representing a drawing showing an example of effecting the scroll by rotating a plurality of icons in the lateral direction, and (D) representing a drawing showing an example of combining a plurality respectively of icons and lists and scrolling both groups synchronously.
[FIG. 14] This is a schematic drawing showing one example of the display of scrolling amount and scrolling direction in a portable telephone 1.
[FIG. 15] This is a schematic drawing showing another example of the display of scrolling amount and scrolling direction in a portable telephone 1.
[FIG. 16] This is a schematic drawing showing still another example of the display of scrolling amount and scrolling direction in a portable telephone 1.

### EXPLANATION OF LETTERS OR NUMERALS

- 1: A portable telephone
- 10: A control part
- 20: A memory part
- 30: A display part
- 40: A voice part
- 50: An input part
- 51: A force sensor
- 52: Various function keys
- 53: A character
- 54: A ten key
- 60: A communication part
- 70: A bus
- 511: A substrate
- 512A: A key top part
- 512C: A columnar supporting part
- 512B: A cylindrical barrier part
- 512: A displacing part
- 513: An opposite electrode
- 513: An electrode

## Claims

1. A data input device which comprises:
a force detecting unit for detecting an applied force;
a scrolling amount determining unit for determining the scrolling amount of an element displayed in a display, based on the magnitude of the force detected by said force detecting unit, and
a scrolling direction determining unit for determining the scrolling direction of said element, based on the change in the direction of the force detected by said force detecting unit.

2. A data input device according to Claim 1, wherein
said force detecting unit serves to detect the applied force as a rectangular coordinate data,
said data input device further comprises a converting unit for converting the rectangular coordinate data detected by said force detecting unit into a polar coordinate data,
said scrolling amount determining unit serves to determine the scrolling amount of the element displayed in the display based on the r value of the polar coordinate data converted by said converting unit, and
said scrolling direction determining unit serves to determine the scrolling direction of said element based on the change in the θ value of the polar coordinate data converted by said converting unit.

3. A data input device according to Claim 1 or Claim 2, wherein
said scrolling amount determining unit serves to determine said scrolling amount by further taking into account the magnitude of the change in said θ value.

4. A data input device according to any of Claim 1 - Claim 3, wherein
said data input device further comprises a memory for storing a table that defines the corresponding relation between the range of said r value and said scrolling amount and
said scrolling amount determining unit serves to determine the scrolling amount corresponding to the r value obtained by said converting unit, based on the table stored in said memory.

5. A data input device according to any of Claim 1 - Claim 4, wherein
said data input device further comprises a first judging unit for judging whether the r value obtained by said converting unit exceeds a prescribed threshold or not and
said scrolling amount determining unit serves to determine said scrolling amount when the r value is judged by said first judging unit to exceed said prescribed threshold.

6. A data input device according to any of Claim 1 - Claim 5, wherein
said data input device further comprises a second judging unit for judging whether the magnitude of the change in the θ value obtained by said converting unit exceeds a prescribed threshold or not and
said scrolling direction determining unit serves to determine said scrolling direction when the magnitude of the change in the θ value is judged by said second judging unit to exceed said prescribed threshold.

7. A data input device according to any of Claim 1 - Claim 6, wherein
said data input device further comprises a display for displaying the scrolling amount determined by said scrolling amount determining unit and the scrolling direction determined by said scrolling direction determining unit.

8. A data input device according to any of Claim 1 - Claim 7, wherein
said data input device is a portable telephone set, a PHS, a notebook personal computer, a portable game device, a PDA, an electronic pocketbook, a remote controller for an electronic device, a digital audio player, a camera, a digital camera, or a cam coder.

9. A data input device according to any of Claim 1 - Claim 8, wherein said data input device is a peripheral device for use in a computer or a game device.

10. A data input method which comprises:
a force detecting step for detecting an applied force;
a scrolling amount determining step for determining the scrolling amount of an element displayed in a display based on the magnitude of the force detected by said force detecting step, and
a scrolling direction determining step for determining the scrolling direction of said element based on the change in the direction of the force detected by said force detecting step.

11. A data input method according to Claim 10, wherein
said force detecting step serves to detect the applied force as a rectangular coordinate value,
said data input method further comprises a converting step for converting the rectangular coordinate data detected by said force detecting unit into a polar coordinate data,
said scrolling amount determining step serves to determine the scrolling amount of the element displayed in the display based on the r value of the polar coordinate data converted by said converting step, and
said scrolling direction determining step serves to determine the scrolling direction of said element based on the change in the θ value of the polar coordinate data converted by said converting step.

12. A data input method according to Claim 10 or Claim 11, wherein
said scrolling amount determining step determines said scrolling amount by further taking into account the magnitude of the change in said θ value.

13. A data input method according to any of Claim 10 - Claim 12, wherein
said data input method further comprises a storing step for storing a table that defines the corresponding relation between the range of said r value and said scrolling amount and
said scrolling amount determining step determines the scrolling amount corresponding to the r value obtained by said converting step, based on the table stored by said storing step.

14. A data input method according to any of Claim 10 - Claim 13, wherein
said data input method further comprises a first judging step for judging whether the r value obtained by said judging step exceeds a prescribed threshold or not and
said scrolling amount determining step determines said scrolling amount when the r value is judged by said first judging unit to exceed said prescribed threshold.

15. A data input method according to any of Claim 10 - Claim 14, wherein
said data input method further comprises a second judging step for judging whether the magnitude of the change in the θ value obtained by said converting step exceeds a prescribed threshold or not and
said scrolling direction determining step determines said scrolling direction when the magnitude of the change in the θ value is judged by said second judging step to exceed said prescribed threshold.

16. A data input method according to any of Claim 10 - Claim 15, wherein
said data input method further comprises a displaying step for displaying the scrolling amount determined by said scrolling amount determining step and the scrolling direction determined by said scrolling direction determining step.

17. A data input program which causes:
a force detecting step for detecting an applied force;
a scrolling amount determining step for determining the scrolling amount of an element displayed in a display based on the magnitude of the force detected by said force detecting step, and
a scrolling direction determining step for determining the scrolling direction of said element based on the change in the direction of the force detected by said force detecting step,
to be executed by a data input device.

18. A data input program according to Claim 17, wherein
said force detecting step serves to detect the applied force as a rectangular coordinate data,
said data input program further causes the converting step for converting the rectangular coordinate data detected by said force detecting step into a polar coordinate data to be executed by the data input device,
said scrolling amount determining step serves to determine the scrolling amount of an element displayed in a display based on the r value of the polar coordinate data converted by said converting step, and
said scrolling direction determining step serves to determine the scrolling direction of said element based on the change in the θ value of the polar coordinate data converted by said converting step.

19. A data input program according to Claim 17 or Claim 18, wherein
said scrolling amount determining step serves to determine said scrolling amount by further taking into account the magnitude of the change in said θ value.

20. A data input program according to any of Claim 17 - Claim 19, wherein
said data input program further causes the storing step for storing a table that defines the corresponding relation between the range of said r value and said scrolling amount to be executed by a data input device, and
said scrolling amount determining step serves to determine the scrolling amount corresponding to the r value obtained by said converting step, based on the table stored by said storing step.

21. A data input program according to any of Claim 17 - Claim 20, wherein
said data input program further causes the first judging step for judging whether the r value obtained by said converting step exceeds a prescribed threshold or not to be executed by a data input device, and
said scrolling amount determining step serves to determine said scrolling amount when the r value is judged by said first judging unit to exceed said prescribed threshold.

22. A data input program according to any of Claim 17 - Claim 21, wherein
said data input program further causes a second judging step for judging whether the magnitude of the change in the θ value obtained by said converting step exceeds the prescribed threshold or not to be executed by a data input device and
said scrolling direction determining step serves to determine said scrolling direction when the magnitude of the change in the θ value is judged by said second judging step to exceed said prescribed threshold.

23. A data input program according to any of Claim 17 - Claim 22, wherein
said data input program further causes a displaying step for displaying the scrolling amount determined by said scrolling amount determining step and the scrolling direction determined by said scrolling direction determining step to be executed by a data input device.

24. A computer readable recording medium which has a data input program according to any of Claim 17 - Claim 23 at least recorded therein.
